# EUROPEAN PATENT APPLICATION

(11) **EP 2 395 788 A1**
(43) Date of publication of application: **14.12.2011**
(21) Application number: 10738546.0
(22) Date of filing: 03.02.2010
(51) Int. Cl.: H04W 28/06, H04B 7/155, H04W 4/06

(54) **WIRELESS COMMUNICATION SYSTEM AND BASE STATION**

(30) Priority: 05.02.2009 JP 2009025341
(71) Applicant: Sharp Kabushiki Kaisha, Osaka-shi, Osaka 545-8522 (JP)
(72) Inventor: TO, Shimpei, Osaka 545-8522 (JP); KUBOTA, Minoru, Osaka 545-8522 (JP); HAMAGUCHI, Yasuhiro, Osaka 545-8522 (JP); NAKAMURA, Osamu, Osaka 545-8522 (JP); YOKOMAKURA, Kazunari, Osaka 545-8522 (JP)
(74) Representative: Müller - Hoffmann & Partner
(86) International application number: PCT/JP2010/051502
(87) International publication number: WO 2010/090215

(57) **Abstract**

Disclosed is a radio communication system including relay stations 20 in a cell, which relay communication between a base station 10 and terminals 30 and employing a transmission scheme of adding a signal, in which a part of a symbol is copied, to the symbol as a Cyclic Prefix, in which, when a common broadcast service signal offered to a plurality of terminals 30 is transmitted in the cell, a length of the Cyclic Prefix added to the signal is adaptively set. This makes it possible to provide a radio communication system or the like capable of performing efficient transmission while preventing degradation of performances by appropriately setting the CP length added to an MBMS signal according to conditions, when performing MBMS transmission in the radio communication system including the relay stations.

## Description

### TECHNICAL FIELD

The present invention relates to a radio communication system or the like including relay stations in a cell, which relay communication between a base station and terminals, to employ a transmission scheme of adding a signal, in which a part of a symbol is copied, to the symbol as a Cyclic Prefix.

### BACKGROUND ART

In recent years, in order to solve tight frequency resources associated with an increasing amount of data communication, construction of a new mobile communication system for realizing high-speed/ large capacity transmission (for example, a WiMAX system or an IMT-Advanced system) has been promoted. A relatively high frequency band is to be used for such a new mobile communication system, and a signal having a higher frequency attenuates more, thus making a coverage smaller compared with a conventional mobile communication system.

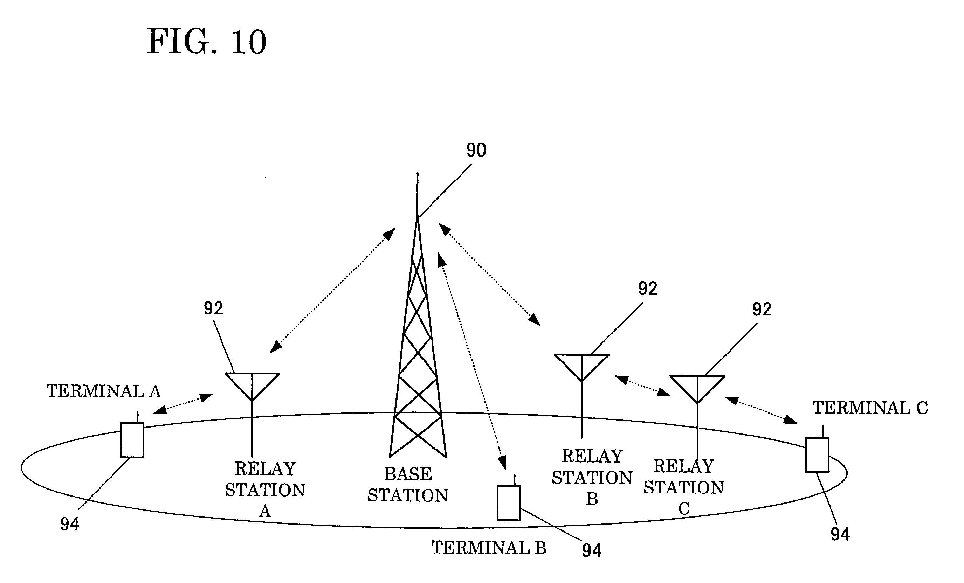

As means for solving such a problem, there is a method of providing relay stations in a cell, which relay communication between a base station and terminals. Here, a conventional radio communication system is shown in FIG. 10. As shown in FIG. 10, in the system, a base station 90 and terminals 94 perform communication, and relay stations 92 are provided to relay communication between the base station and the terminals. Here, out of the terminals 94, a terminal B performs communication with the base station 90 directly while terminals A and C perform communication via the relay stations 92. The terminal A performs communication with the base station 90 via a relay station A, and the terminal C performs communication with the base station 90 via relay stations B and C.

The relay stations include one which amplifies a received signal to be transmitted in a same frame (repeater), one which amplifies a received signal to be transmitted in a subsequent frame (Amplify-and-Forward: AF type), one which demodulates and decodes a received signal once, and when there is no error, remodulates the signal to be transmitted (Decode-and-Forward: DF type), and the like, and a base station and terminals remote from the base station (terminals which are located near a cell edge) perform communication via several relay stations, thereby making it possible to maintain a coverage of a cell similarly to that of a conventional system without degrading reception performances of these terminals.

Moreover, in such a mobile communication system, an MBMS (Multimedia Broadcast and Multicast Service) for providing multimedia broadcast and a multicast service to a plurality of terminals is expected to be adopted to specifications (which is called an MBS in the WiMAX). This MBMS is a signal transmitted toward terminals which are located at various points in a cell, and simultaneously transmitted from a plurality of transmitters (a base station or a sector) so that even at terminals located near a cell edge or a sector edge, a service with good reception performances is able to be received. In this way, the plurality of transmitters perform the transmission simultaneously, thereby signals are combined and received through propagation channels, and thus received without large degradation of the performances even at the terminals located near the cell edge.

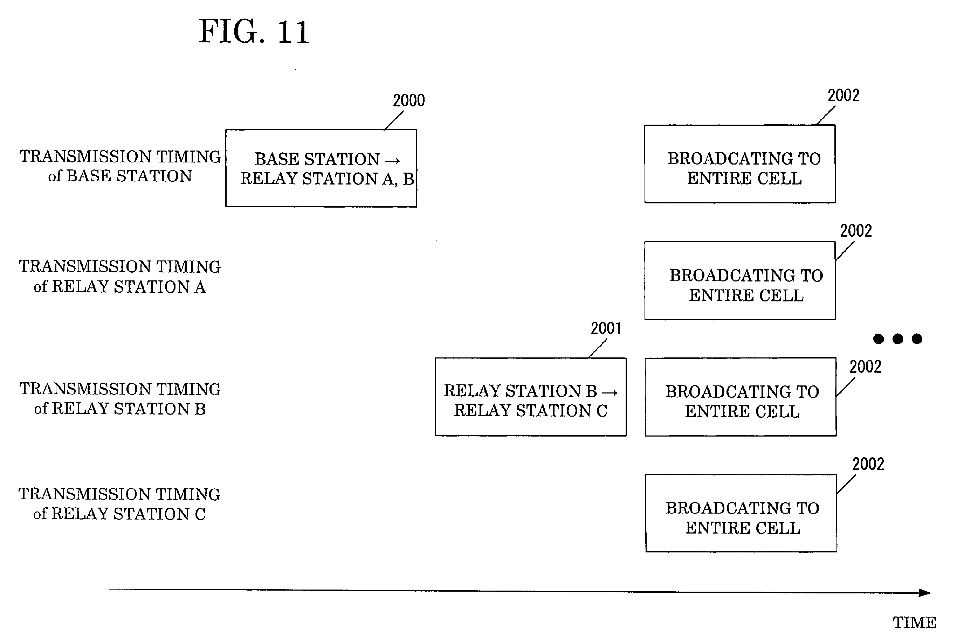

In a system including relay stations like the WiMAX, MBMS transmission as shown in FIG. 11 is performed so that a base station and relay stations are able to transmit signals simultaneously toward terminals in a cell (see, for example, Non-Patent Literature 1). FIG. 11 is a diagram showing timing that the base station 90 and the relay stations 92 in the cell shown in FIG. 10 transmit the MBMS. When performing the MBMS transmission, as shown in FIG. 11, first, transmission is performed from the base station 90 to the relay station A and the relay station B (a frame 2000).

The relay station B transmits a received signal further to the relay station C at next transmission timing (a frame 2001). At the time, the base station 90 and the relay station 92 (A) do not perform transmission related to the MBMS. By such transmission, all the relay stations 92 in the cell receive the MBMS , and at the next transmission timing, the base station 90 and all the relay stations 92 broadcast the MBMS toward the plurality of terminals 94 in the cell simultaneously (a frame 2002). By performing such control, all transmission stations (base station 90 and relay stations 92) in the cell are able to transmit the MBMS simultaneously.

### Known Art Literature

### Non-Patent Literature

Non-Patent Literature 1: "Air Interface for Fixed and Mobile Broadband Wireless Access Systems", IEEE802.16j-06/026r4

### SUMMARY OF THE INVENTION

### PROBLEMS TO BE SOLVED BY THE INVENTION

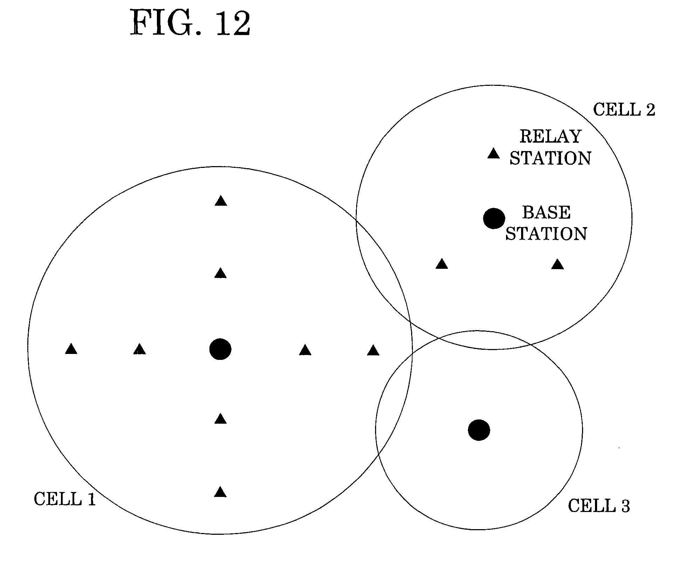

It is desirable that all cells in a cellular system have same sizes and shapes ideally, however, in an actual system, the sizes and shapes are varied due to geography and an arrangement of buildings. Accordingly, as shown in FIG. 12, the number of the relay stations 92 installed in each cell of cells 1 to 3 is also varied, and the maximum number of hops in each cell (showing the number of the relay stations 92 which relay communication between the base station and the terminals, and the maximum number of hops in the cell 1 is 2, and the maximum number of hops in the cell 2 is 1) is also varied. When performing MBMS transmission in such various cell environments, there has been a problem in that a cell with larger maximum number of hops has a higher possibility that an MBMS signal with a large delay time arrives at terminals, and when a signal having a delay time exceeding a CP (Cyclic Prefix) length arrives, the signal becomes interference, thus extremely degrading a reception quality.

Accordingly, in order to effectively combine such MBMS signals having a large delay time so as not to become interference, the CP length needs to be set according to conditions, however, in the conventional system provided with the relay stations 92, such adaptive setting of the CP length has not been performed.

Additionally, a delay time of a signal arriving at a destination is frequently different between a case where an MBMS signal is transmitted from the base station 90 to a relay station 92 and from the relay station 92 to another relay station 92, and a case where simultaneous broadcasting of MBMS signals in a cell is performed. Even in such cases, setting of the CP length according to conditions of transmission is needed in order to perform efficient transmission, which has not been taken into account in the conventional system.

In view of the problems described above, an object of the present invention is to provide a communication system capable of performing efficient transmission while preventing degradation of performances by appropriately setting a CP length added to an MBMS signal according to conditions, when performing MBMS transmission in a cellular system including relay stations.

### MEANS TO SOLVE THE PROBLEMS

In order to solve the problems described above, a radio communication system of the present invention including relay stations in a cell, which relay communication between a base station and terminals, to employ a transmission scheme of adding a signal, in which a part of a symbol is copied, to the symbol as a Cyclic Prefix, is **characterized in that**, when a common broadcasting service signal offered to a plurality of terminals in the cell is transmitted, a length of the Cyclic Prefix added to the broadcasting service signal is adaptively set.

Further, the radio communication system of the present invention is **characterized in that** the length of the Cyclic Prefix is set according to a maximum value of the number of the relay stations through which the communication is relayed between the base station and the terminals in the cell is relayed.

Further, the radio communication system of the present invention is **characterized in that** the length of the Cyclic Prefix is set to be long when the maximum value of the number of the relay stations through which the communication is relayed between the base station and the terminals in the cell is relayed, is larger than a predetermined threshold.

Further, the radio communication system of the present invention is **characterized in that** the length of the Cyclic Prefix is set to be different between when the broadcasting service signal is transmitted from the base station to a relay station or transmitted between the relay stations, and when the plurality of terminals in the cell is broadcasted.

Further, the radio communication system of the present invention is **characterized in that** the length of the Cyclic Prefix is set to be long when the broadcasting service signal is broadcasted to a plurality of terminals in the cell, and set to be shorter when transmitted from the base station to a relay station or transmitted between the relay stations, than when broadcasted to the plurality of terminals.

A base station of the present invention is a base station in a radio communication system including relay stations in a cell, which relay communication between a base station and terminals and employing a transmission scheme of adding a signal, in which a part of a symbol is copied, to the symbol as a Cyclic Prefix, characterized by including judging means for judging whether or not there is a relay station in the cell, and Cyclic Prefix length setting means for, when the judging means judges that there is a relay station in the cell, setting the length of the Cyclic Prefix added when a common broadcasting service signal offered to a plurality of terminals in the cell is transmitted to be longer compared with a case where there is no relay station.

### ADVANTAGEOUS EFFECTS OF THE INVENTION

A CP length added to an MBMS signal according to conditions can appropriately be set by employing the present invention, when performing MBMS transmission in a cellular system including relay stations. This makes it possible to transmit an MBMS signal added with a long CP in a condition where a delayed wave with a long delay time arrives and prevent degradation of reception performances due to influence of the delayed wave. Additionally, when the CP length is set to be short, it is possible to transmit more symbols, or reduce interference to other cells by not performing transmission with a time resource which is not currently used.

### BRIEF DESCRIPTION OF THE DRAWINGS

[FIG. 1] is a diagram showing an overview of a radio communication system to which the present invention is applied;
[FIG. 2] is a diagram for illustrating a configuration of a base station in a first embodiment;
[FIG. 3] is a diagram for illustrating a configuration of a relay station in the first embodiment;
[FIG. 4] is a diagram for illustrating a configuration of a terminal in the first embodiment;
[FIG. 5] is an operation flow for illustrating processing of the base station in the first embodiment;
[FIG. 6] is a diagram for illustrating frames in a second embodiment;
[FIG. 7] is a diagram for illustrating a configuration of a base station in the second embodiment;
[FIG. 8] is a diagram for illustrating a configuration of a relay station in the second embodiment;
[FIG. 9] is an operation flow for illustrating processing of the base station in the second embodiment;
[FIG. 10] is a diagram showing an overview of a conventional radio communication system;
[FIG. 11] is a diagram for illustrating conventional frames; and
[FIG. 12] is a diagram for illustrating conventional cells including a base station and a relay station.

### MODE FOR CARRYING OUT THE INVENTION

In the present invention, when an MBMS transmission in a cellular system provided with relay stations is performed, a length of a CP added to an MBMS signal is set according to conditions. Specifically, the invention relates to a method of setting a CP length according to a maximum number of hops in a cell or a cell group in which same MBMS transmission is performed. Further, the invention relates to a method of setting a different CP length between a case where an MBMS signal is transmitted from a base station to a relay station, and from the relay station to a relay station, and a case where simultaneous broadcasting of MBMS signals in a cell is performed.

### [First embodiment]

First, description will be given for a first embodiment. The present embodiment shows a method of setting a CP length according to a maximum number of hops in a cell or in a cell group in which same MBMS transmission is performed. This is control to effectively combine MBMS signals through channels by setting a CP length moderately long so as to remove interference due to a delayed wave, since a cell with a large number of hops is usually a cell with a large area (for example, a cell 1 in FIG. 12 described above), and in the cell with a large area, an MBMS signal having relatively long delay is frequently received by a terminal.

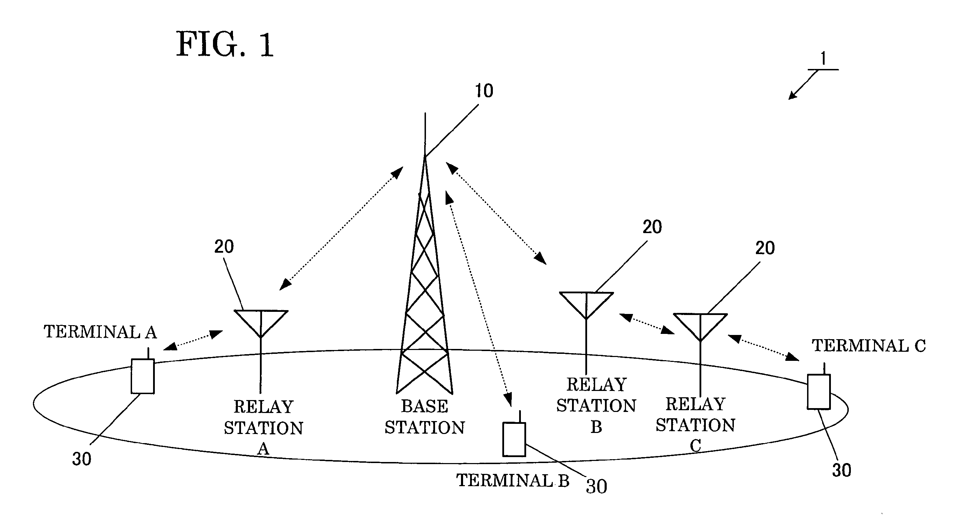

First, description will be given for an overview of a radio communication system 1 in the present embodiment using FIG. 1. The radio communication system 1 is configured to include a base station 10, relay stations 20, and terminals 30. Further, concerning the terminals 30, a terminal A, a terminal B and a terminal C perform communication with the base station 10. Here, the communication with the base station 10 is performed by the terminal A via a relay station A, by the terminal B not via the relay station 20, and by the terminal C via relay stations B and C.

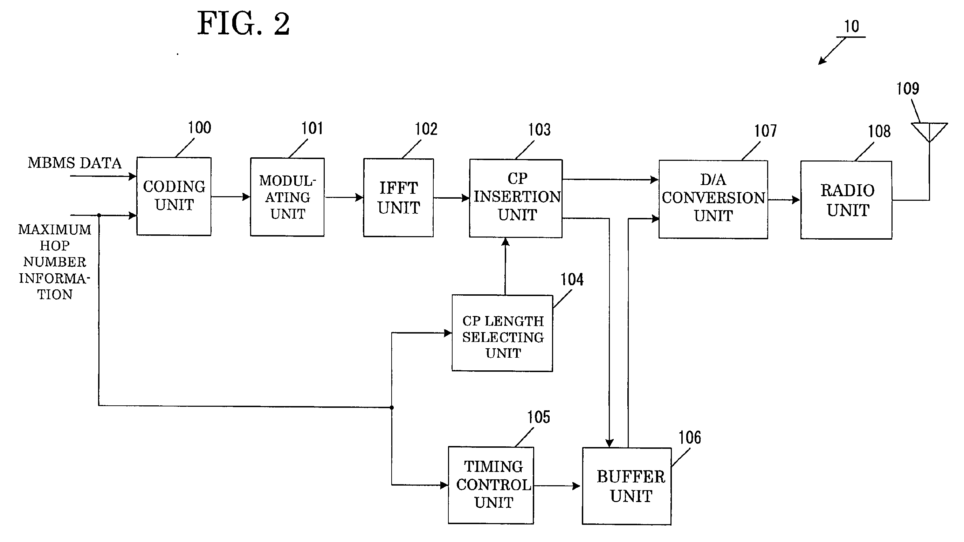

The configuration of the base station 10 included in the radio communication system 1 is shown in FIG. 2. As shown in FIG. 2, the base station 10 in the present embodiment is configured to include a coding unit 100, a modulation unit 101, an IFFT unit 102, a CP insertion unit 103, a CP length selecting unit 104, a timing control unit 105, a buffer unit 106, a D/A conversion unit 107, a radio unit 108 and a transmission antenna unit 109.

When MBMS transmission is performed in the base station 10, first, information related to MBMS data and a maximum number of hops of a cell (maximum hop number information) is input to the coding unit 100 so as to forward error correction coded. Here, the maximum hop number information is one which is to be notified to the relay stations 20 or the terminals 30 in the cell, and based on the information, a CP length used in the base station 10 is also selected in each relay station 20 or the terminal 30, which enables removing and adding a CP with a length which is same as that is used in the base station 10.

Therefore, transmission of the information related to the maximum number of hops is performed prior to transmission of the MBMS data. However, a CP which is added in transmitting the maximum hop number information is to have a length which is fixed in advance. Further, the information related to the maximum number of hops is also input to the CP length selecting unit 104 and the timing control unit 105.

The signal that is error correction coded in the coding unit 100 is input to the modulating unit 101 so as to be subjected to modulating processing. Subsequently input thereof to the IFFT unit 102 is performed so as to be converted from a frequency-domain signal to a time-domain signal. An output of the IFFT unit 102 is input to the CP insertion unit 103 so as to be added with a CP, in which a part of a rear unit of a symbol is copied. At this time, a CP length selected in the CP length selecting unit 104 based on the maximum hop number information is notified to the CP insertion unit 103, and the CP with the notified length is added to the output of the IFFT unit 102. A method of selecting the CP length in the CP length selecting unit 104 will be described below.

The signal added with the CP in the CP insertion potion 103 is output to the buffer unit 106 and the D/A conversion unit 107. Output is performed from the CP insertion unit 103 to the D/A conversion unit 107 in a case where a relay station or a terminal in a cell is notified of information related to the maximum number of hops prior to MBMS transmission and in a case where the relay station 20 in the cell is notified of the MBMS signal (for example, a case such as a frame 2000 shown in FIG. 11).

Further, input to the D/A conversion unit 107 is performed via the buffer unit 106 in a case where simultaneous transmission of the MBMS signals is performed in a cell (for example, a case such as a frame 2002 shown in FIG. 11).

The buffer unit 106 is notified of timing of MBMS simultaneous transmission determined based on the maximum number of hops in the timing control unit 105, and a transmission signal is held therein until the timing comes. When the timing of the MBMS simultaneous transmission comes, the signal which has been held in the buffer unit 106 is input to the D/A conversion unit 107 so as to be converted from a digital signal to an analog signal. Then, after converting the frequency in the radio unit 108 so as to have a frequency band to which transmission is possible, transmission is performed from the transmission antenna unit 109.

With the base station 10 having such an apparatus configuration, a CP length according to a maximum number of hops in a cell is able to be selected, and it is possible to suppress degradation of reception performances due to arrival of a delayed wave exceeding the CP length in transmitting the MBMS signal. Further, in a case where there is no relay station in the cell, or the maximum number of hops is small, a short CP length is used so that more symbols are able to be transmitted or interference to other cells is able to be reduced by not performing transmission by a time resource which is not currently used.

Note that, in the base station 10 in the present embodiment, multi-carrier transmission is to be performed, however, it is not limited thereto as long as being a transmission scheme in which addition of a CP is performed, and which may be single-carrier transmission. Further, the base station 10 in FIG. 2 has a configuration in which the information related to the maximum number of hops is notified to the relay stations 20 or the terminals 30, however, may have a configuration in which direct notification of information related to a CP length selected in the base station 10 is performed.

Further, in the embodiment, it is configured to select the CP length based on the maximum number of hops in a cell, however, in the case of performing the MBMS transmission which is common in a plurality of cells, may be configured to select the CP length according to the maximum number of hops in the cell group. In this case, a reception unit is added to the base station 10 shown in FIG. 2 so that each base station constituting the cell group notifies each other of a maximum number of hops of its cell, or in a case where there is a control station for controlling the cell group, the maximum number of hops of each cell is notified via the control station.

Further, in the present embodiment, although the timing of the simultaneous transmission of the MBMS is described to be dependent on the maximum number of hops of the cell, the timing of the simultaneous transmission of the MBMS is determined in advance in some systems, and in such systems, notification of the maximum number of hops or the MBMS signals to the relay stations or the terminals in the cell is performed in advance so that the simultaneous transmission is able to be performed at determined timing.

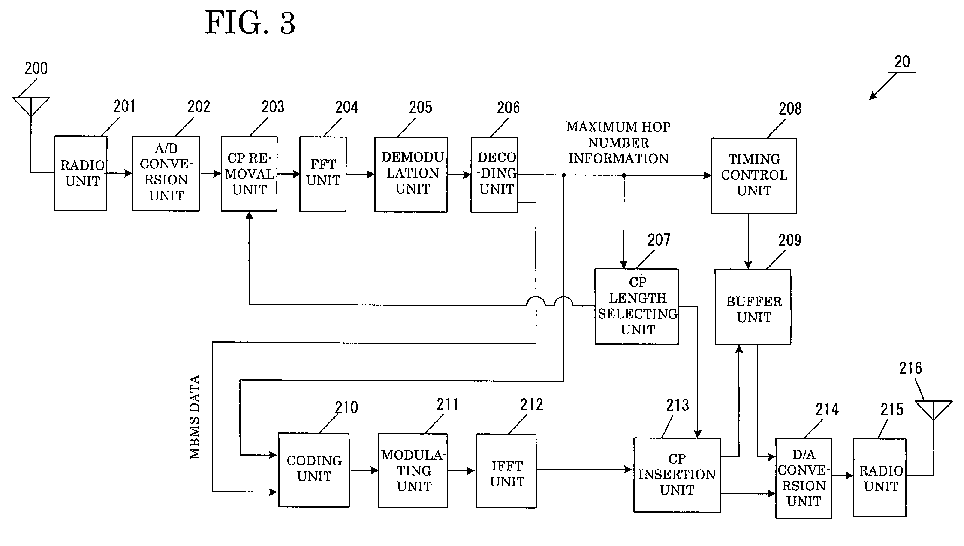

Next, the configuration of the relay station 20 in the present embodiment is shown in FIG. 3. In the present embodiment, a relay station of a DF type which demodulates, decodes and modulates again a received signal to be relayed is shown. Note that, a block of an error detection or the like is omitted.

As shown in FIG. 3, the relay station 20 in the present embodiment is configured to include a reception antenna unit 200, radio units 201 and 215, an A/D conversion unit 202, a CP removal unit 203, an FFT unit 204, a demodulating unit 205, a decoding unit 206, a CP length selecting unit 207, a timing control unit 208, a buffer unit 209, a coding unit 210, a modulating unit 211, an IFFT unit 212, a CP insertion unit 213, a D/A conversion unit 214, and a transmission antenna unit 216.

In the case of performing the MBMS transmission to be performed in the embodiment, a signal which is transmitted from the base station 10 is received by the reception antenna unit 200 in the relay station 20, and for which frequency conversion into a frequency which is A/D convertible is performed in the radio unit 201, and thereafter, subjected to AD conversion in the A/D conversion unit 202, and removal therefrom of the CP which is added in the base station 10 is performed by the CP removal unit 203. However, in the case of the information related to the maximum number of hops notified prior to the MBMS transmission, the CP which has a fixed length determined in advance is removed and in the case where the MBMS signal is notified, the CP with a length selected in the CP length selecting unit 207 based on the information related to the maximum number of hops is removed. The signal in which the CP is removed by the CP removal unit 203 is input to the FFT unit 204 so as to be converted from a time-domain signal to a frequency-domain signal.

Then, demodulation of the received signal is performed in the demodulating unit 205, and decoding is performed in the decoding unit 206. The maximum hop number information decoded in the decoding unit 206 is input to the CP length selecting unit 207 and to the timing control unit 208, so as to be used to control thereof respectively. In the CP length selecting unit 207, as with the CP length selecting unit 104 provided in the base station 10, a CP length added to an MBMS signal is selected based on the maximum hop number information.

Further, in the timing control unit 208 also, based on the maximum hop number information, control of timing is performed so that the MBMS signal is held in the buffer unit 209 until the simultaneous transmission into the cell is performed. The maximum hop number information is also input to the coding unit 210 so as to be notified to the terminal 30 or a next relay station 20.

In the coding unit 210, an error correction coding of input information is performed, and modulation thereof is performed in the modulating unit 211. The signal modulated in the modulating unit 211 is input to the IFFT unit 212 so as to be converted from the frequency-domain signal to the time-domain signal. Then, in the CP insertion potion 213, a CP is added.

Note that, as with the CP insertion unit 103 in the base station 10, the CP insertion unit 213 adds a CP which has a fixed length determined in advance in the case where the information related to the maximum number of hops is notified to the terminal 30 or the next relay station 20, and for the MBMS signal, a CP with a length notified from the CP length selecting unit 207 is added. The signal added with the CP in the CP insertion potion 213 is output to the buffer unit 209 and the D/A conversion unit 214. Input is performed from the CP insertion unit 213 to the D/A conversion unit 214 when the terminal or a next relay station is notified of information related to the maximum number of hops prior to MBMS transmission and when the next relay station in the cell is notified of the MBMS signal (for example, a case such as a frame 2001 shown in FIG. 11), and input to the D/A conversion unit 214 is performed via the buffer unit 209 when simultaneous transmission of the MBMS signal is performed in the cell (for example, a case such as a frame 2002 shown in FIG. 11).

The buffer unit 209 is notified of timing of MBMS simultaneous transmission determined based on the maximum hop number information in the timing control unit 208, and a transmission signal is held therein until the timing comes.

When the timing of the MBMS simultaneous transmission comes, the signal which has been held in the buffer unit 209 is input to the D/A conversion unit 214 so as to be converted from the digital signal to the analog signal. Then, after converting the frequency in the radio unit 215 so as to be a frequency band to which transmission is possible, transmission is performed from a transmission antenna unit 216.

With the relay station 20 having such a configuration, even when the CP length added to the MBMS signal varies according to the maximum number of hops in a cell or a cell group, a CP having an appropriate length is removed and added so that relaying a signal is able to be performed.

Although in the present embodiment, the relay station of the DF type is shown, a relay station of an AF type in which a received signal is amplified to be relayed may be used, or a relay station for relaying in a same frame, called a repeater, may be used.

Note that, in the case of the relay station of the repeater type, the removal and the addition of the CP is not performed in the relay station, and the CP length selecting unit 207 is not required, either. Further, in the case of the relay station of the AF type in which the received signal is relayed in a subsequent frame, as with the relay station of the DF type, the removal and the addition of the CP may be or may not be performed in the relay station.

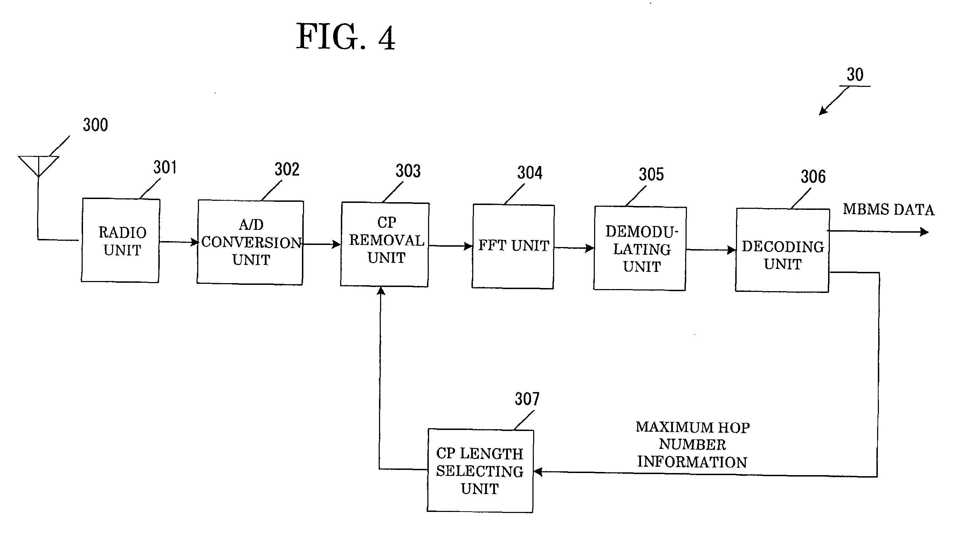

Next, the configuration of the terminal 30 in the present embodiment is shown in FIG. 4. As shown in FIG. 4, the terminal 30 is configured to include a reception antenna unit 300, a radio unit 301, an A/D conversion unit 302, a CP removal unit 303, an FFT unit 304, a demodulating unit 305, a decoding unit 306, and a CP length selecting unit 307.

The configuration of the terminal 30 is the same as the reception system of the relay station 20 shown in FIG. 3 (reception antenna unit 200 to CP length selecting unit 207), and the configuration is such that the CP with a length selected in the CP length selecting unit 307 based on the maximum hop number information notified prior to the MBMS transmission is removed in the CP removal unit 303.

With the terminal 30 having such a configuration, even when a CP length added to the MBMS signal varies according to a maximum number of hops in a cell or a cell group, a CP having an appropriate length is removed and a signal is able to be demodulated.

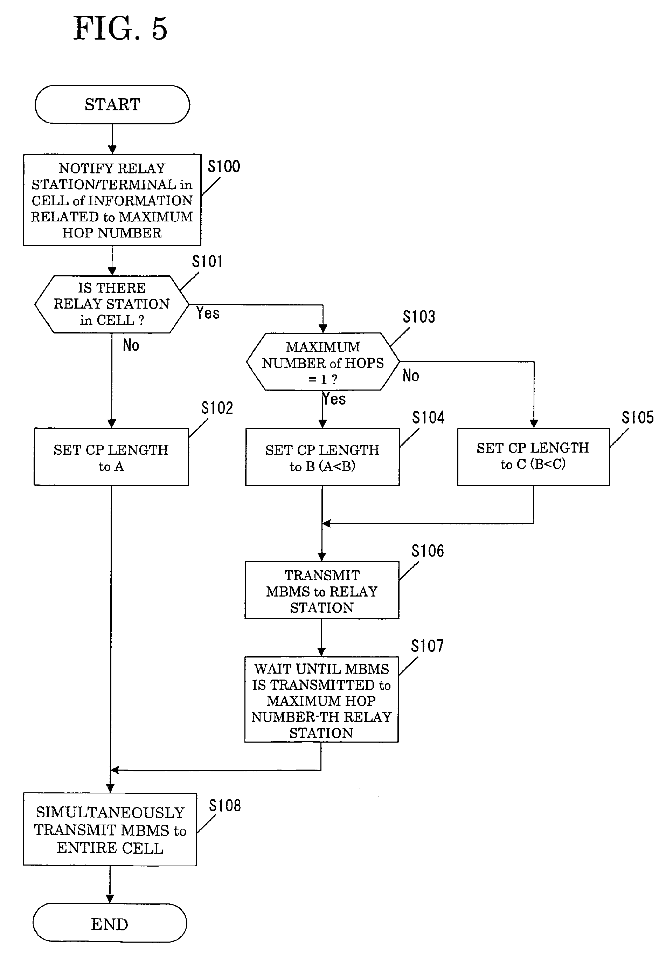

Further, a control flow of the base station 10 in the present embodiment is shown in FIG. 5. As shown in FIG. 5, in the base station 10 in the present embodiment, first, information related to a maximum number of hops in a cell is notified to the relay station 20 or the terminal 30 (step S100). Based on the information, the relay station 20 or the terminal 30 comes to set a CP length added to an MBMS signal which is to be transmitted afterwards. Note that, the notification of the information related to the maximum number of hops is not necessary to be performed frequently, and may be notified with separate control information which is unique to a cell.

Next, at the base station 10, determination is made on whether or not there is a relay station 20 in a cell (step S101). Here, when there is no relay station 20 in the cell, the CP length is set to A (step S101; No → step S102). Note that, the CP length "A" here is the same CP length as that is added when transmitting data unique to the terminal or longer than that.

On the other hand, in a case where there is a relay station 20 in the cell, determination is made on whether or not the maximum number of hops is "1" (step S101; Yes → step S103). When the maximum number of hops is "1" (step S103; Yes), a CP length "B" is set to be slightly longer than that of a case where the relay station 20 is not installed (A < B) (step S104).

Furthermore, when the maximum number of hops is not "1", namely, is "2" or more (step S103; No), it is assumed that a signal with a large delay time arrives at the terminal 30, and therefore, a CP length "C" which is moderately long (B < C) is set (step S105).

Then, an MBMS signal added with a CP of a set length is transmitted to a relay station 20 (step S106), and the transmission of the MBMS is waited until when the MBMS signal goes over to a maximum hop number-th relay station 20 (step S107). Note that, at the time of waiting, transmission of signals except the MBMS signal may be performed.

Finally, the MBMS are simultaneously transmitted to the entire cell and the control is finished (step S108). Note that, it is assumed that the above-described values such as "A", "B" and "C" are determined in advance.

By performing such control, a CP length added to the MBMS signal is able to be set according to a maximum number of hops in a cell, and the degradation of reception performances due to the arrival of the delayed wave exceeding the CP length is able to be prevented.

Further, when the CP length is set to be short (CP length is set to A), more symbols are able to be transmitted (it may be a signal separate to the MBMS signal), or by not performing transmission by the time resource which is not currently used, the interference to other cells is able to be reduced.

Further, also in the relay station 20 or the terminal 30, the selection of the CP length as shown in FIG. 5 based on the maximum hop number information notified from the base station 10 (steps S101 to S105) is performed, which enables removal or addition of a CP with the same length as that is added at the base station 10.

Note that, in the present embodiment, the threshold of the maximum number of hops is assumed to be "0", "1", "2" or more, however, not limited thereto, and which may be other values. Furthermore, the CP length to be set is assumed to be three kinds of "A", "B" and "C", however, which is not limited thereto. Moreover, as described above, in the present embodiment, it is configured that the maximum hop number information is notified to the relay station 20 or the terminal 30, however, may be configured that the CP length selected in the base station 10 may be notified as it is. Furthermore, in a case where the MBMS transmission which is common in a plurality of cells is to be performed, control to select the CP length may be performed based on a maximum number of hops in the cell group.

### [Second embodiment]

Next, description will be given for a second embodiment. In the first embodiment, an embodiment in which the CP length added to the MBMS signal is selected based on the maximum number of hops in the cell or the cell group has been shown, however, the CP length of the same length is used in the case where the MBMS signal is notified from the base station 10 to the relay station 20, and from the relay station 20 to another relay station 20 prior to the simultaneous transmission, and in the case where the MBMS signals are transmitted simultaneously from respective transmission stations in a cell or a cell group (base station 10 and relay station 20). In contrast, the second embodiment shows an embodiment using a CP length which is different between at the time of notification of the MBMS signal prior to the simultaneous transmission and at the time of simultaneous transmission in a cell or a cell group.

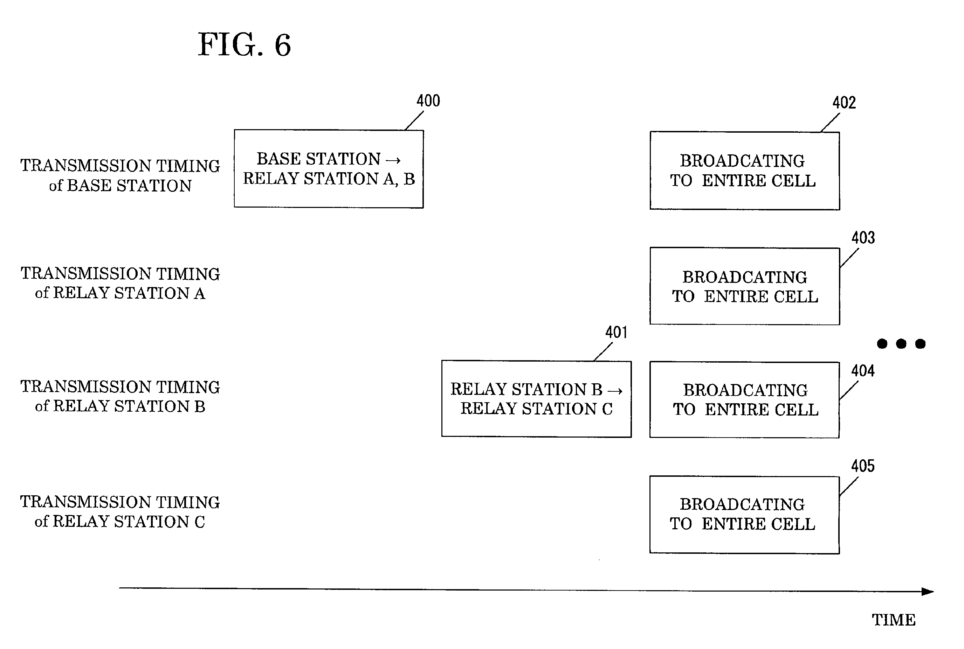

Description for an overview of the second embodiment will be given using FIG. 6. Note that, Fig. 6 shows a frame configuration of the MBMS signal transmitted in a cell environment shown in FIG. 1. As shown in FIG. 6, in the present embodiment, in the frame 400 showing the transmission from the base station 10 to the relay stations A and B, and in the frame 401 showing the transmission from the relay station B to the relay station C, the CP length added to each symbol is assumed to be "D", however, contrary to this, in the frames 402 to 405 in which the base station 10 and all the relay stations 20 in the cell broadcast the MBMS signals toward the entire cell, "E" which is longer than "D" is assumed to be used as the CP length. However, the CP length "D" in here is assumed to be the same length as the CP length added at the time of transmitting the data unique to the terminal or is longer than that.

This is because the frame 401 or 402 is not for transmission toward the terminals 30, and therefore, there is a low possibility that a delayed wave having a large delay time arrives at the reception side (relay station 20), and in contrast, the frame for performing simultaneous transmission is for transmission toward the terminal 30 which is scattered about in the cell, and therefore, a distance between a terminal and some transmission stations (base station 10 and relay station 20) varies so that the delayed wave with a large delay time may be considered to arrive at the terminal 30.

That is, even in the case of transmitting the same MBMS signal, in the frame 401 or 402 with small delay, a short CP length is used in order to utilize a radio resource effectively, and in the frames 402 to 405 in which there is a high possibility that a signal with large delay arrives, a long CP length is used in order to prevent degradation of reception performances due to the influence of the delayed wave.

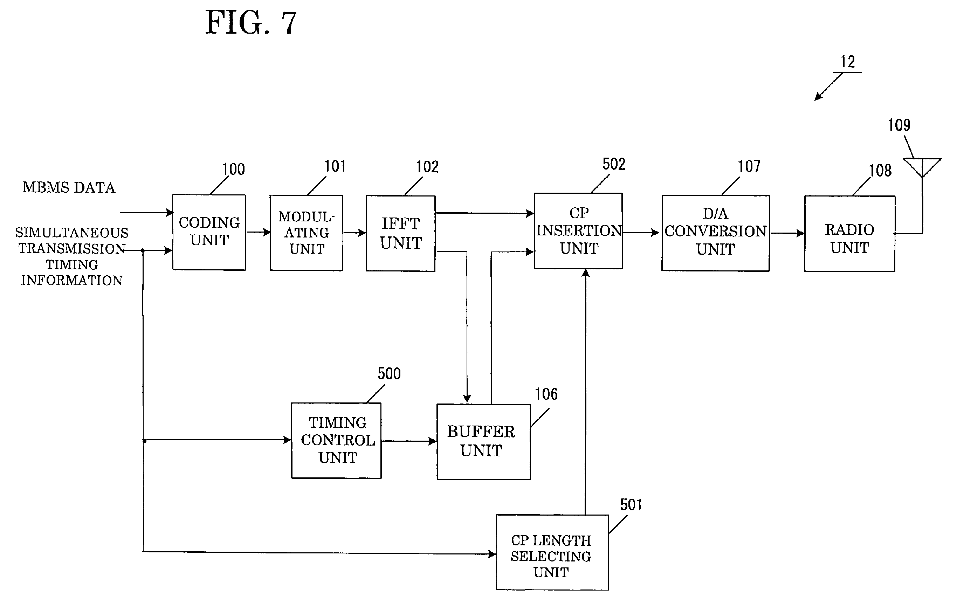

The configuration of the base station 12 for performing such control is shown in FIG. 7. Note that, blocks which are the same as those of the base station 10 shown in FIG. 2 are given the same numbers, and a description thereof is omitted. As shown in FIG. 7, the base station 12 in the present embodiment, differently from FIG. 2, inputs the output of the IFFT unit 102 to a CP insertion unit 502 and the buffer unit 106.

Further, information related to timing of simultaneous transmission (simultaneous transmission timing information) is input to a CP length selecting unit 501 or a timing control unit 500 so as to control the CP length added to the MBMS signal or the timing of the addition. The simultaneous transmission timing information is also input to the coding unit 100 so as to be notified to the relay station 20 or the terminal 30.

In the timing control unit 500, the timing for performing the simultaneous transmission in the entire cell is managed to be notified to the buffer unit 106. In the buffer unit 106, the output of the IFFT unit 102 is held until when the simultaneous transmission is performed, and output to the CP insertion unit 502 when the timing comes. In the CP length selecting unit 501, as described above, a short CP length is selected at the time of performing notification of the MBMS signal to the relay station 20, and a long CP length is selected at the time of performing simultaneous transmission in the entire cell so as to notify the CP insertion unit 502.

Thereby, in the CP insertion unit 502, a CP length is able to be added which is different according to the transmission timing of the MBMS signal (whether it is the transmission timing addressed to the relay station 20 or the simultaneous transmission timing addressed to the terminal in the cell), and a resource is able to be utilized effectively according to conditions.

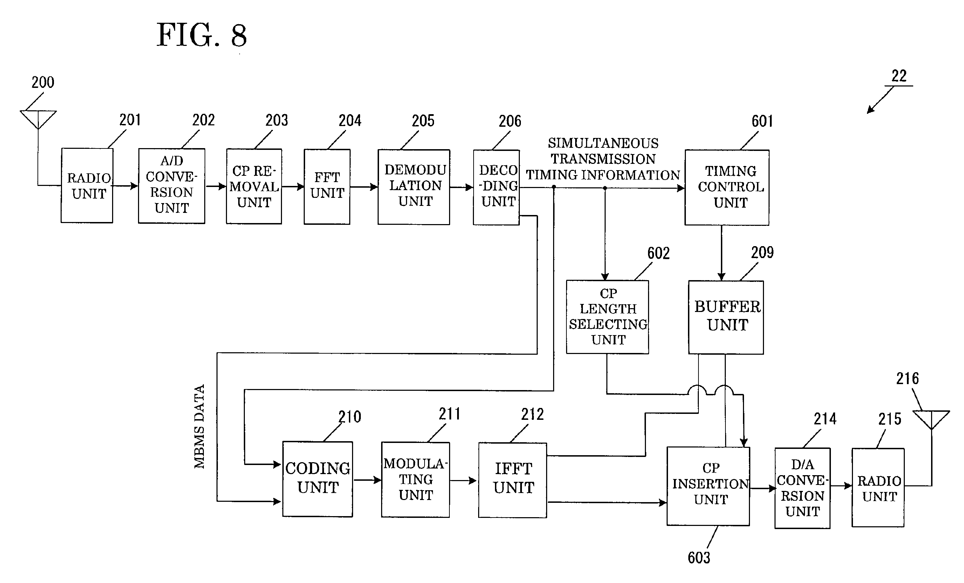

Further, an apparatus configuration of the relay station 22 in the present embodiment is shown in FIG. 8. Note that, blocks which are the same as those of the relay station 20 shown in FIG. 3 are given the same numbers, and a description thereof is omitted.

As shown in FIG. 8, the relay station 22 in the present embodiment inputs simultaneous transmission timing information which has been notified from the base station 10 in advance in the CP length selecting unit 602 and the timing control unit 601, so as to control a CP length added based on the information and a timing of the addition.

For example, in the case of performing transmission (relaying) of an MBMS signal, which is different from the simultaneous transmission, to a relay station 22 with a larger maximum number of hops than itself, a short CP is selected in a CP length selecting unit 602 so as to notify a CP insertion unit 603 of this. Furthermore, at the time of simultaneous transmission toward the entire cell, a long CP is selected so as to notify a CP insertion unit 603 of this.

In the CP insertion unit 603, the CP of the notified length is added to be transmitted. Here, although the information related to the CP length is not input to the CP removal unit 203, this is because the MBMS signal received by the relay station 22 in the present embodiment is a signal to which a short CP is added all the time (frame 400 or 401 in FIG. 6), and there is no need for the CP removal unit 203 to perform control of removing the CP having different length.

With the relay station 22 having such a configuration, as with the base station 12 shown in FIG. 7, in the CP insertion unit 603, a CP length is able to be added which is different according to the transmission timing of the MBMS signal (whether it is the transmission timing addressed to the relay station 22 or the simultaneous transmission timing addressed to the terminal 30 in the cell).

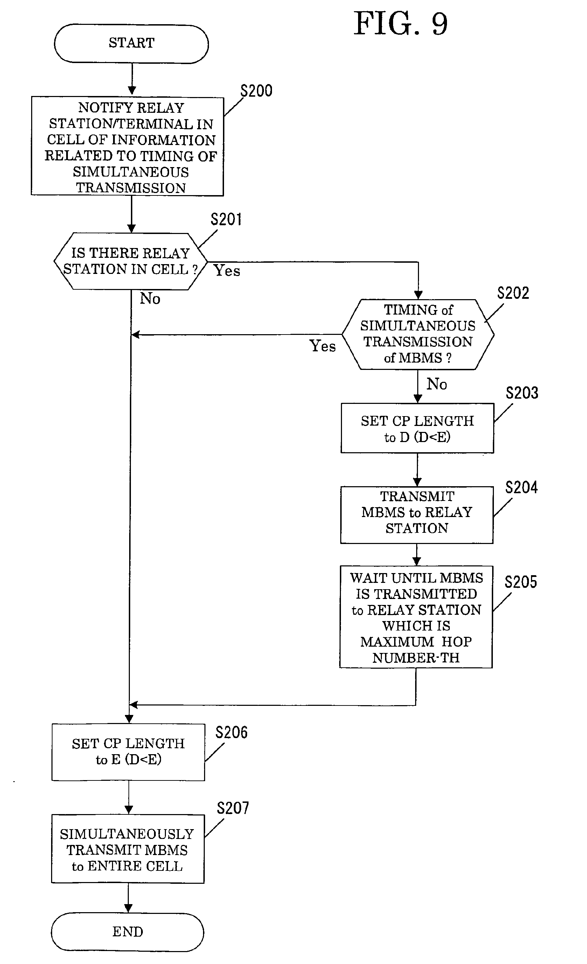

Here, a control flow of the base station 12 in the present embodiment is shown in FIG. 9. The base station 12 in the present embodiment, first, prior to MBMS transmission, notifies the relay station 22 or the terminal 30 of information related to timing of simultaneously transmitting the MBMS in the cell (step S200).

Next, presence/absence of the relay station 22 is judged, and when there is no relay station 22 in the cell (step S201; No), the flow goes to step S206, and when there is a relay station in the cell (step S201; Yes), the flow goes to step S202.

At step S202, whether or not it is the timing of simultaneously transmitting the MBMS in the cell is determined, and when it is the timing of simultaneous transmission (step S202; Yes), the flow goes to step S206, and when it is not the timing of simultaneous transmission yet (step S202; No), the flow goes to step S203.

When it is not the timing of simultaneous transmission (step S202; No), since it is necessary to notify the relay station 22 in the cell of the MBMS signal, a short CP (D) is set (step S203), and an MBMS signal added with the CP which has been set to be short is transmitted to the relay station 22 (step S204). Then, waiting until when the MBMS signal goes over to a maximum hop number-th relay station in the cell (step S205) and the timing of simultaneous transmission comes, a CP (E) which is longer than the one set at step S203 is set (step S206), and MBMS signals added with the CP which has been set to be long are simultaneously transmitted toward the entire cell (step S207).

By performing such control, it is possible to add a different CP length according to transmission timing of the MBMS signal (whether it is transmission timing to the relay station 22 or timing of simultaneous transmission to terminals 30 in the cell).

Then, it is possible to use the short CP length to effectively utilize a radio resource in a frame with small delay, and by using the short CP length, utilize a resource which is not currently used and transmit a control signal or the like. Moreover, it is possible to effectively utilize a resource according to conditions, such as using a long CP length in order to prevent degradation of reception performances due to influence of a delayed wave in a frame with a high possibility that a signal with large delay arrives. Also for the relay station 22, control may be performed to change setting of a CP length to be added similarly to the base station 12 based on information related to the timing of simultaneous transmission notified from the base station 12.

Note that, in the present embodiment, the configuration is such that information of simultaneous transmission of the MBMS is notified from the base station 12 to the relay stations 22 or the terminals 30 in the cell, however, there is also a system in which transmission timing of the MBMS is determined in advance, and in such a system, it is not necessary to notify information related to the timing of simultaneous transmission, thus notification of the maximum number of hops or the MBMS signal is to be performed in advance to the relay stations 22 or the terminals 30 in the cell so that the simultaneous transmission is able to be performed at determined timing. Moreover, the present embodiment may be employed together with the first embodiment.

### [Modification example]

The embodiments of the present invention have been described in detail with reference to the drawings so far, however, a specific configuration is not limited to the embodiments, and a design or the like without departing from the spirit of the invention is also included in the scope of claims.

### [EXPLANATIONS OF NUMERALS]

- 1: radio communication system
10, 12 base station
100 coding unit
101 modulating unit
102 IFFT unit
103, 502 CP insertion unit
104, 501 CP length selecting unit
105, 500 timing control unit
106 buffer unit
107 D/A conversion unit
108 radio unit
109 transmission antenna unit
20, 22 relay station
200 reception antenna unit
201, 215 radio unit
202 A/D conversion unit
203 CP removal unit
204 FFT unit
205 demodulating unit
206 decoding unit
207, 602 CP length selecting unit
208, 601 timing control unit
209 buffer unit
210 coding unit
211 demodulating unit
212 IFFT unit
213, 603 CP insertion unit
214 D/A conversion unit
215 radio unit
216 transmission antenna unit
30 terminal
300 reception antenna unit
301 radio unit
302 A/D conversion unit
303 CP removal unit
304 FFT unit
305 demodulating unit
306 decoding unit
307 CP length selecting unit

## Claims

1. A radio communication system comprising:
relay stations in a cell, which relay communication between a base station and terminals, to employ a transmission scheme of adding a signal, in which a part of a symbol is copied, to the symbol as a Cyclic Prefix, wherein
when a common broadcasting service signal offered to a plurality of terminals in the cell is transmitted, a length of the Cyclic Prefix added to the broadcasting signal is adaptively set.

2. The radio communication system according to Claim 1, wherein
the length of the Cyclic Prefix is set according to a maximum value of the number of the relay stations through which the communication between the base station and the terminals is relayed in the cell.

3. The radio communication system according to Claim 2, wherein
the length of the Cyclic Prefix is set to be long when the maximum value of the number of the relay stations, through which the communication between the base station and the terminals is relayed in the cell, is larger than a predetermined threshold.

4. The radio communication system according to Claim 1 or Claim 2, wherein
the length of the Cyclic Prefix is set to be different between when the broadcasting service signal is transmitted from the base station to a relay station or transmitted between the relay stations, and when the signal broadcasted to the plurality of terminals in the cell.

5. The radio communication system according to Claim 4, wherein
the length of the Cyclic Prefix is set to be long when the broadcasting service signal is broadcasted to the plurality of terminals in the cell, and set to be shorter when transmitted from a base station to the relay station or transmitted between the relay stations, than when broadcasted to the plurality of terminals.

6. A base station in a radio communication system comprising relay stations in a cell, which relay communication between a base station and terminals and employing a transmission scheme of adding a signal, in which a part of a symbol is copied, to the symbol as a Cyclic Prefix, comprising:
judging means for judging whether or not there is a relay station in the cell; and
Cyclic Prefix length setting means for, when the judging means judges that there is a relay station in the cell, setting the length of the Cyclic Prefix added when a common broadcasting service signal offered to a plurality of terminals in the cell is transmitted to be longer compared with a case where there is no relay station.
